# EUROPÄISCHE PATENTSCHRIFT

(11) **EP 2 948 697 B1**
(45) Veröffentlichungstag und Bekanntmachung des Hinweises auf die Patenterteilung: **15.03.2017**
(21) Anmeldenummer: 14700477.4
(22) Anmeldetag: 14.01.2014
(51) Int. Cl.: F16H 59/10, F16H 59/02, F16H 61/36

(54) **SCHALTUNGSVORRICHTUNG FÜR EIN AUTOMATIKGETRIEBE**
SHIFTING DEVICE FOR AN AUTOMATIC GEARBOX
DISPOSITIF DE CHANGEMENT DE RAPPORT POUR BOÎTE DE VITESSES AUTOMATIQUE

(30) Priorität: 23.01.2013 DE 102013100667
(43) Veröffentlichungstag der Anmeldung: 02.12.2015
(73) Patentinhaber: ECS Engineered Control Systems AG, 9015 St. Gallen (CH)
(72) Erfinder: SCHIRMER, Heiko, 21649 Regesbostel (DE)
(74) Vertreter: Müller, Eckhard
(86) Internationale Anmeldenummer: PCT/EP2014/050567
(87) Internationale Veröffentlichungsnummer: WO 2014/114523

(56) Entgegenhaltungen:
- DE-A1- 10 063 604
- DE-A1- 10 252 009
- FR-A1- 2 797 229
- US-A1- 2004 031 346

## Beschreibung

Die Erfindung betrifft eine Schaltungsvorrichtung für ein Automatikgetriebe eines Kraftfahrzeuges, mit einem Betätigungshebel, der zum Anwählen von Fahrstufen in unterschiedliche Stellungen bewegbar ist, und mit einem beweglich gelagerten Übertragungsbauteil, zum Übertragen von Bewegungen des Betätigungshebels auf wenigstens ein weiteres Bauteil, insbesondere auf einen Seilzug, wobei der Betätigungshebel wahlweise von dem Übertragungsbauteil entkoppelbar oder mit dem Übertragungsbauteil koppelbar ist.

Eine Vorrichtung dieser Art ist in DE 10 2012 106 544 A1 beschrieben.

Eine andere Schaltungsvorrichtung ist in der DE 100 63 604 A1 beschrieben. Dabei ist ein Bolzen von einem als Druckstange bezeichneten Vorsprung verschiebbar ausgebildet. Mittels der Druckstange wird dieser Bolzen heruntergedrückt, um so einen Kabelblock in einem automatischen Modus von einem Hebelgehäuse der Schaltvorrichtung zu trennen , wobei eine Rückholfeder für den Bolzen vorgesehen ist, die den Bolzen in seine ursprüngliche Lage zurückholt, um so den Kabelblock in einem manuellen Modus mit dem Hebelgehäuse zu verkoppeln.

Eine nochmals andere Schaltvorrichtung zeigt die DE 102 52 009 A1. Hierbei ist ein Schaltschlitten vorgesehen, der in einer Ebene linear beweglich gelagert und derart ausgebildet ist, dass durch eine Kraftkopplung die Bewegung eines Schalthebels in einer ersten Schaltgasse eine lineare Bewegung des Schaltschlittens bewirkt und durch eine Bewegung des Schalthebels in einer zweiten Schaltgasse eine Entkopplung der Bewegung des Schalthebels vom Schaltschlitten bewirkt wird.

Aus der FR 2 797 229 A1, welche die Merkmale des Oberbegriffs des Anspruchs 1 offenbart, ist ein Gangwahlhebel bekannt, der in mehrere Stellungen schwenkbar ist, wobei der Schaltzustand eines Getriebes in einer ersten Gruppe der besagten Stellungen mittels eines Seilzugs und in einer zweiten Gruppe durch elektronische Mittel beeinflusst wird. Der Gangwahlhebel ist in eine Reihe von Aussparungen in einem Schaltblock schwenkbar, um in der besagten ersten Stellungsgruppe eine Gangwahlhebelbewegung auf den Seilzug zu übertragen. Befindet sich der Gangwahlhebel in der zweiten Gruppe der besagten Stellungen, wird dessen Bewegung nicht auf den Seilzug übertragen. Es ist die Aufgabe der vorliegenden Erfindung, eine Vorrichtung dieser Art anzugeben, die ein zuverlässiges Koppeln des Betätigungshebels mit dem Übertragungsbauteil, sowie ein zuverlässiges Entkoppeln erlaubt, und die darüber hinaus besonders verschleißfest ist.

Die Aufgabe wird durch eine Schaltungsvorrichtung nach Anspruch 1 gelöst. Die erfindungsgemäße Schaltungsvorrichtung hat den ganz besonderen Vorteil, dass durch die beweglich gelagerte Aufnahme eine Kopplung auch dann herbeigeführt werden kann, wenn sich der Betätigungshebel nicht ganz genau in der für die Einkopplung vorgesehenen Position befindet.
Die erfindungsgemäße Schaltungsvorrichtung hat darüber hinaus den ganz besonderen Vorteil einer äußerst geringen Verschleißanfälligkeit in Bezug auf die bei der Kopplung ineinandergreifenden Bauteile, weil durch die bewegliche Lagerung der Aufnahme das Auftreten von Kräften, die beispielsweise den Rand der Aufnahme oder Teile des Vorsprungs beschädigen könnten, vermieden werden.

Bei der erfindungsgemäßen Ausführung ist die Aufnahme gegen die Kraft einer Federvorrichtung, die beispielsweise eine Blattfeder aufweisen kann, beweglich gelagert. Wenn der Betätigungshebel den Vorsprung aufweist, ist die Aufnahme vorzugsweise an und/oder in dem Übertragungsbauteil gegen die Kraft der Federvorrichtung beweglich festgelegt. Alternativ kann umgekehrt auch vorgesehen sein, dass das Übertragungsbauteil den Vorsprung aufweist und die Aufnahme an und/oder in dem Betätigungshebel gegen die Kraft der Federvorrichtung beweglich angeordnet ist. Im ersteren Fall ist vorzugsweise vorgesehen, dass die Federvorrichtung unmittelbar zwischen dem Übertragungsbauteil und der Aufnahme wirkt. Im letztgenannten Fall ist hingegen vorzugsweise vorgesehen, dass die Federvorrichtung unmittelbar zwischen dem Betätigungshebel und der Aufnahme wirkt.

Wie bereits erwähnt, kann vorteilhaft vorgesehen sein, dass die Federvorrichtung eine Blattfeder aufweist oder als Blattfeder ausgebildet ist. Eine solche Ausführung kann in vorteilhafter Weise besonders kompakt ausgebildet sein. Es ist jedoch auch möglich, Federvorrichtungen anderen Typs zu verwenden.

Bei einer besonders vorteilhaften Ausführung ist vorgesehen, dass die Aufnahme in einer Aussparung des Betätigungshebels bzw. des Übertragungsbauteils beweglich, insbesondere linear beweglich geführt ist. Insbesondere kann vorteilhaft vorgesehen sein, dass der Betätigungshebel eine Aussparung aufweist, in der die Aufnahme entlang der Richtung, in der der Vorsprung in die Aufnahme einführbar ist, linear beweglich geführt ist. Alternativ kann vorgesehen sein, dass das Übertragungsbauteil die Aussparung aufweist, in der die Aufnahme entlang der Richtung, in der der Vorsprung des Betätigungshebels einführbar ist, linear beweglich geführt ist.

Die Aufnahme kann insbesondere behälterartig ausgeführt sein und eine Öffnung aufweisen, durch die der Vorsprung einführbar ist. Alternativ oder zusätzlich kann vorgesehen sein, dass die Aufnahme eine starre Hülle aufweist, die in der Kopplungsstellung zumindest einen Teil des Vorsprungs umgibt.

Vorzugsweise ist vorgesehen, dass der Vorsprung in der Kopplungsstellung spielfrei in der Aufnahme aufgenommen ist. Auf diese Weise sind störende Klappergeräusche und eine unnötige Beweglichkeit des Betätigungshebels in der Kupplungsstellung wirkungsvoll vermieden.

Insbesondere um das Herbeiführen der Kopplungsstellung zu erleichtern, kann in vorteilhafter Weise vorgesehen sein, dass sich ein Hohlraum der Aufnahme, ausgehend von einer Öffnung, durch die der Vorsprung einführbar ist, verjüngt und/oder dass die Aufnahme innen konisch ausgebildet ist. Insbesondere kann alternativ oder zusätzlich vorgesehen sein, dass sich der Vorsprung zu seinem freien Ende hin verjüngt und/oder dass der Vorsprung konisch ausgebildet ist.

Vorzugsweise weisen die Aufnahme und der Vorsprung sich einander entsprechende Verjüngungen und/oder Konizitäten auf, um ein formschlüssiges, spielfreies Ineinandergreifen zu gewährleisten.

In vorteilhafter Weise kann vorgesehen sein, dass der Betätigungshebel und/oder das Übertragungsbauteil in einem Schaltrahmen beweglich, insbesondere drehbar oder schwenkbar, gelagert sind und/oder dass der Betätigungshebel und das Übertragungsbauteil in einem Schaltrahmen um eine gemeinsame Schwenkachse drehbar oder schwenkbar gelagert sind.

Bei einer besonderen Ausführung ist der Betätigungshebel wahlweise in eine erste Schaltgasse oder eine zweite, vorzugsweise parallele Schaltgasse überführbar, insbesondere schwenkbar. In der ersten Schaltgasse ist er vorzugsweise mit dem Übertragungsbauteil derart mechanisch verkoppelt, dass bei einer Verschwenkung des Betätigungshebels in der ersten Schaltgasse das Übertragungsbauteil in gleicher Weise mit bewegt, insbesondere mit verschwenkt wird. In der zweiten Schaltgasse ist der Betätigungshebel vorzugsweise nicht mit dem Übertragungsbauteil verkoppelt, sodass er in der zweiten Schaltgasse verschwenkt werden kann, ohne dass das Übertragungsbauteil seinen Bewegungen folgt. In der entkoppelten Stellung kann insbesondere vorgesehen sein, dass das Übertragungsbauteil durch ein Arretiermittel so lange in seiner Stellung fixiert wird, bis der Betätigungshebel wieder mit dem Übertragungsbauteil verkoppelt wird.

In vorteilhafter Weise kann vorgesehen sein, dass ein Entkoppeln bzw. Koppeln durch Verschwenken des Betätigungshebels in einer Schwenkrichtung senkrecht zu den Schaltgassenrichtungen erfolgt.

Von besonderem Vorteil ist ein Getriebe, insbesondere ein Automatikgetriebe, oder ein Kraftfahrzeug mit einer erfindungsgemäßen Schaltungsvorrichtung.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
Fig. 1 ein Ausführungsbeispiel einer erfindungsgemäßen Schaltungsvorrichtung in der entkoppelten Stellung,

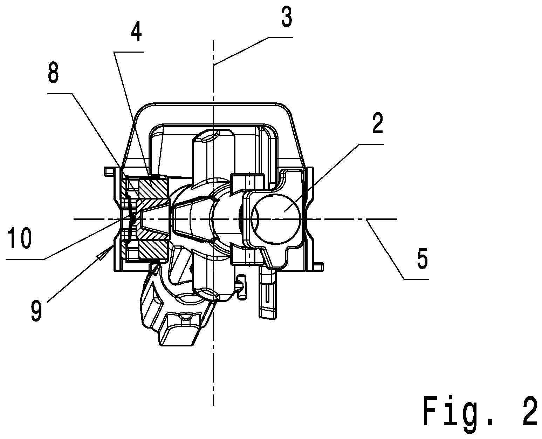

Fig. 2 das Ausführungsbeispiel in einer Querschnittsdarstellung mit Blickrichtung auf das freie Ende des Betätigungshebels
Fig. 3 eine perspektivische Darstellung der Schaltungsvorrichtung gemäß dem Ausführungsbeispiel in der gekoppelten Stellung und
Fig. 4 das Ausführungsbeispiel in der gekoppelten Stellung in einer Querschnittsdarstellung mit Blickrichtung auf das freie Ende des Betätigungshebels.

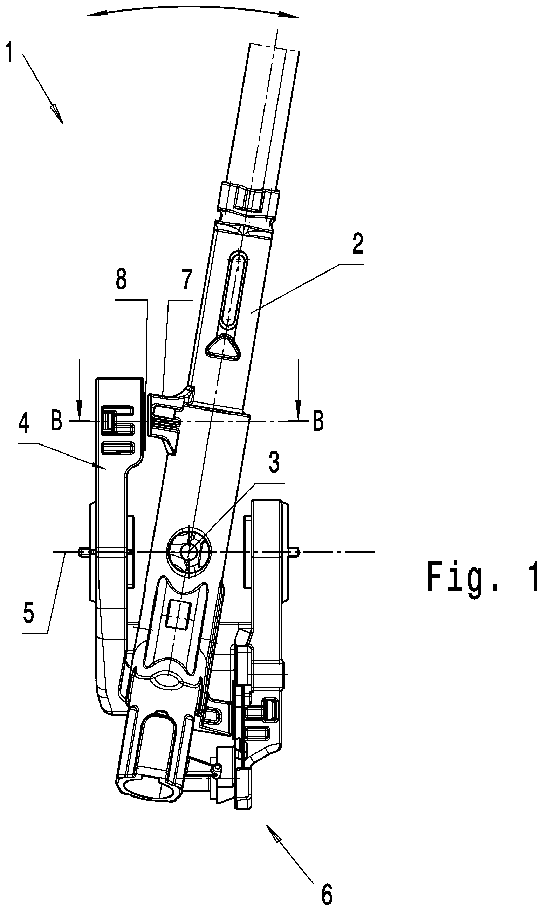

Fig. 1 zeigt eine Schaltungsvorrichtung 1 mit einem Betätigungshebel 2, der zum Anwählen von Fahrstufen in unterschiedliche Stellungen bewegbar ist. Konkret ist der Betätigungshebel durch Verschwenken um eine erste Achse 3 wahlweise in eine erste Schaltgasse oder eine zweite Schaltgasse verschwenkbar gelagert.

Die Schaltungsvorrichtung weist außerdem ein Übertragungsbauteil 4 zum Übertragen von Bewegungen des Betätigungshebels 2 auf wenigstens ein weiteres Bauteil (nicht dargestellt) auf. Das Übertragungsbauteil 4 ist um eine zweite Achse 5 schwenkbar gelagert. Am unteren Ende des Übertragungsbauteils 4 ist eine Kopplungsvorrichtung 6 zum Ankoppeln eines Seilzuges vorgesehen.

In der gezeigten Stellung ist der Betätigungshebel von dem Übertragungsbauteil entkoppelt und kann ohne das Übertragungsbauteil 4 mit zu bewegen, um die zweite Achse 5 zum Hoch-oder Runterschalten verschwenkt werden.

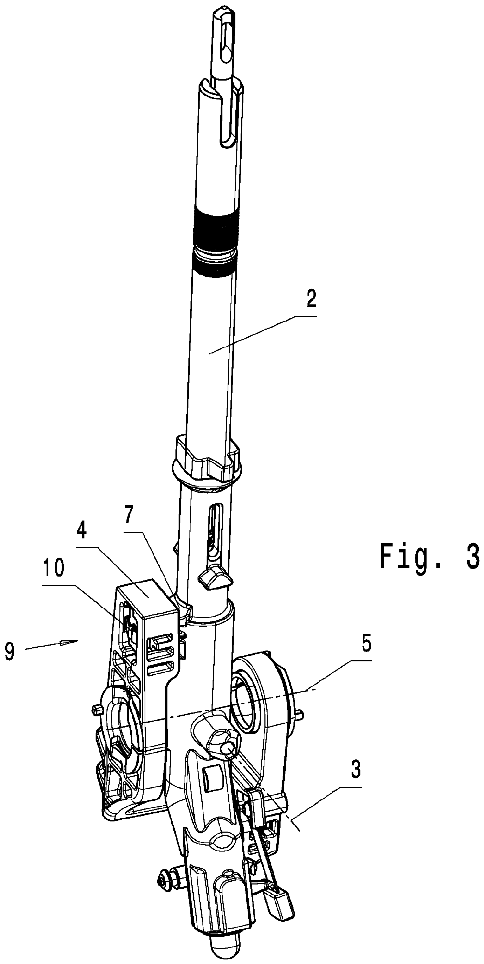

Zur Herbeiführung einer Kopplung wird der Betätigungshebel 2 um die erste Achse 3 verschwenkt, wodurch ein Vorsprung 7 des Betätigungshebels 2 in eine Aufnahme 8 des Übertragungsbauteils eingreift. Die Kopplungsstellung ist in Fig. 3 gezeigt.

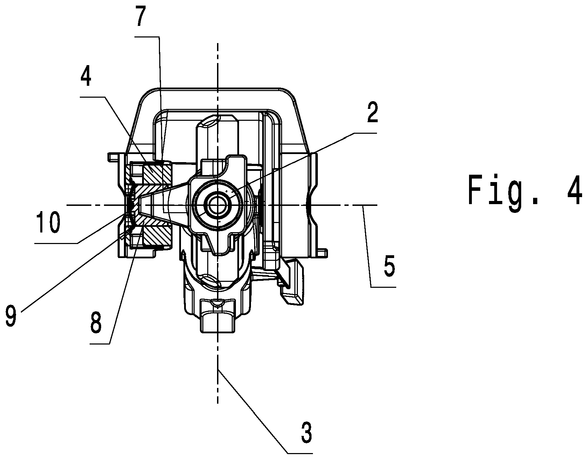

Fig. 4 zeigt die Schaltungsvorrichtung in einer Schnittdarstellung mit einer Blickrichtung auf das freie Ende des Betätigungshebels 2.

Es ist zu erkennen, dass die Aufnahme 8 in einer Aussparung 9 des Übertragungsbauteils 4 gegen die Kraft einer Blattfeder 10 beweglich gelagert ist. Darüber hinaus ist zu erkennen, dass sich der Vorsprung 7 zu seinem freien Ende hin verjüngt und die Innenwände der Aussparung 8 ebenfalls einen sich verjüngenden Raum, in den der Vorsprung 7 in der Kopplungsstellung formschlüssig eingreift, umgeben.

### Bezugszeichenliste

- 1: Schaltungsvorrichtung
- 2: Betätigungshebel
- 3: Erste Achse
- 4: Übertragungsbauteil
- 5: Zweite Achse
- 6: Kopplungsvorrichtung
- 7: Vorsprung
- 8: Aufnahme
- 9: Aussparung
- 10: Blattfeder

## Patentansprüche

1. Schaltungsvorrichtung (1) für ein Automatikgetriebe, eines Kraftfahrzeuges, mit einem Betätigungshebel (2), der zum Anwählen von Fahrstufen in unterschiedliche Stellungen bewegbar ist, und mit einem beweglich gelagerten Übertragungsbauteil (4), zum Übertragen von Bewegungen des Betätigungshebels (2) auf wenigstens ein weiteres Bauteil, insbesondere auf einen Seilzug, wobei der Betätigungshebel (2) wahlweise von dem Übertragungsbauteil (4) entkoppelbar oder mit dem Übertragungsbauteil (4) koppelbar ist, wobei zur Herbeiführung einer Kopplung ein Vorsprung (7) des Betätigungshebels (2) in eine Aufnahme (8) eingreift, die beweglich an oder in dem Übertragungsbauteil (4) gelagert ist oder zur Herbeiführung einer Koppelung ein Vorsprung des Übertragungsbauteils (4) in eine Aufnahme eingreift, die beweglich an oder in dem Betätigungshebel (2) gelagert ist,
**dadurch gekennzeichnet, dass** die Aufnahme (8) gegen die Kraft einer Federvorrichtung relativ zu dem Betätigungshebel (2) oder relativ zu dem Übertragungsbauteil (4) beweglich gelagert ist.

2. Schaltungsvorrichtung (1) nach Anspruch 1, **dadurch gekennzeichnet, dass** die Federvorrichtung eine Blattfeder (10) aufweist.

3. Schaltungsvorrichtung (1) nach einem der Ansprüche 1 oder 2, **dadurch gekennzeichnet, dass**
a. der Betätigungshebel (2) eine Aussparung (9) aufweist, in der die Aufnahme (8) beweglich geführt ist oder dass
b. der Betätigungshebel (2) eine Aussparung (9) aufweist, in der die Aufnahme (8) linear beweglich geführt ist oder dass
c. der Betätigungshebel (2) eine Aussparung (9) aufweist, in der die Aufnahme (8) entlang der Richtung, in der der Vorsprung (7) einführbar ist, linear beweglich geführt ist oder dass
d. das Übertragungsbauteil (4) eine Aussparung (9) aufweist, in der die Aufnahme (8) beweglich geführt ist oder dass
e. das Übertragungsbauteil (4) eine Aussparung (9) aufweist, in der die Aufnahme (8) linear beweglich geführt ist oder dass
f. das Übertragungsbauteil (4) eine Aussparung (9) aufweist, in der die Aufnahme (8) entlang der Richtung, in der der Vorsprung (7) einführbar ist, linear beweglich geführt ist.

4. Schaltungsvorrichtung (1) nach einem der Ansprüche 1 bis 3, **dadurch gekennzeichnet, dass**
a. die Aufnahme (8) behälterartig ausgeführt ist und eine Öffnung aufweist, durch die der Vorsprung (7) einführbar ist und/oder dass
b. die Aufnahme (8) eine starre Hülle aufweist, die in der Kopplungsstellung zumindest einen Teil des Vorsprungs (7) umgibt.

5. Schaltungsvorrichtung (1) nach einem der Ansprüche 1 bis 4, **dadurch gekennzeichnet, dass**
a. sich ein Hohlraum der Aufnahme (8) ausgehend von einer Öffnung, durch die der Vorsprung (7) einführbar ist, verjüngt und/oder dass
b. die Aufnahme (8) innen konisch ausgebildet ist.

6. Schaltungsvorrichtung (1) nach einem der Ansprüche 1 bis 5, **dadurch gekennzeichnet, dass** sich der Vorsprung (7) zu seinem freien Ende hin verjüngt und/oder dass der Vorsprung (7) konisch ausgebildet ist.

7. Schaltungsvorrichtung (1) nach einem der Ansprüche 1 bis 6, **dadurch gekennzeichnet, dass**
a. der Betätigungshebel (2) und/oder das Übertragungsbauteil (4) in einem Schaltrahmen beweglich, insbesondere drehbar oder schwenkbar, gelagert sind oder dass
b. der Betätigungshebel (2) und das Übertragungsbauteil (4) in einem Schaltrahmen um eine gemeinsame Schwenkachse (5) drehbar oder schwenkbar gelagert sind.

8. Schaltungsvorrichtung (1) nach einem der Ansprüche 1 bis 7, **dadurch gekennzeichnet, dass** der Betätigungshebel (2) wahlweise in eine erste Schaltgasse überführbar, insbesondere schwenkbar, ist, in der er mit dem Übertragungsbauteil (4) verkoppelt ist, oder in eine zweite Schaltgasse überführbar, insbesondere schwenkbar, ist, in der er nicht mit dem Übertragungsbauteil (4) verkoppelt ist.

9. Automatikgetriebe mit einer Schaltungsvorrichtung (1) nach einem der Ansprüche 1 bis 8.

10. Kraftfahrzeug mit einem Automatikgetriebe nach Anspruch 9 oder einer Schaltungsvorrichtung (1) nach einem der Ansprüche 1 bis 8.

## Claims

1. Shifting device (1) for an automatic gear box of a motor vehicle, with an operating lever (2) that can be moved into different positions for the purpose of selecting gears, and with a moveably mounted transmission component (4) for transmitting movements of the operating lever (2) to at least one other structural component, in particular to a pull cable, wherein the operating lever (2) can optionally be decoupled from the transmission component (4) or can be coupled to the transmission component (4), wherein, for the purpose of creating a coupling, a projection (7) of the operating lever (2) meshes into a reception area (8) that is mounted in a moveable manner at or in the transmission component (4), or, for the purpose of creating a coupling, a projection of the transmission component (4) meshes into a reception area that is mounted in a moveable manner at or in the operating lever (2),
**characterized in that** the reception area (8) is mounted so as to be moveable relative to the operating lever (2) and/or relative to the transmission component (4) against the force of a spring device.

2. Shifting device (1) according to claim 1, **characterized in that** the spring device has a leaf string (10).

3. Shifting device (1) according to one of the claims 1 or 2, **characterized in that**
a. the operating lever (2) has a recess (9) inside of which the reception area (8) is guided in a moveable manner, or that
b. the operating lever (2) has a recess (9) inside of which the reception area (8) is guided in a linearly moveable manner, or that
c. the operating lever (2) has a recess (9) inside of which the reception area (8) is guided in a linearly moveable manner along a direction in which the projection (7) can be inserted, or that
d. the transmission component (4) has a recess (9) inside of which the reception area (8) is guided in a moveable manner, or that
e. the transmission component (4) has a recess (9) inside of which the reception area (8) is guided in a moveable manner, or that
f. the transmission component (4) has a recess (9) inside of which the reception area (8) is guided in a linearly moveable manner along a direction in which the projection (7) can be inserted.

4. Shifting device (1) according to one of the claims 1 to 3, **characterized in that**
a. the reception area (8) is embodied in a container-like manner and has an opening through which the projection (7) can be inserted, and/or that
b. the reception area (8) has a rigid sleeve which surrounds at least a part of the projection (7) in the coupling position.

5. Shifting device (1) according to one of the claims 1 to 4, **characterized in that**
a. a hollow space of the reception area (8) tapers off starting at an opening through which the projection (7) can be inserted, and/or that
b. the reception area (8) is embodied in a conical manner at its inside.

6. Shifting device (1) according to one of the claims 1 to 5, **characterized in that** the projection (7) tapers off towards its free end and/or that the projection (7) is designed in conical manner.

7. Shifting device (1) according to one of the claims 1 to 6, **characterized in that**
a. the operating lever (2) and/or the transmission component (4) are mounted in a switch frame in a moveable manner, in particular in a rotatable or a pivotable manner, or that
b. the operating lever (2) and the transmission component (4) are mounted in a switch frame so as to be rotatable or pivotable about a common pivot axis (5).

8. Shifting device (1) according to one of the claims 1 to 7, **characterized in that** the operating lever (2) can optionally be transferred, in particular pivoted, into a first shift gate in which it is coupled to the transmission component (4), or be transferred, in particular pivoted, into a second shift gate in which it is not coupled to the transmission component (4).

9. Automatic gear box with a shifting device (1) according to one of the claims 1 to 8.

10. Motor vehicle with an automatic gear box according to claim 9 or a shifting device (1) according to one of the claims 1 to 8.

## Revendications

1. Dispositif de changement de rapports (1) pour une boîte de vitesses automatique d'un véhicule automobile, comprenant un levier d'actionnement (2) qui peut être déplacé dans différentes positions pour sélectionner des rapports de conduite, et comprenant un composant de transfert (4) supporté de manière mobile, pour le transfert de mouvements du levier d'actionnement (2) à au moins un composant supplémentaire, en particulier à un câble Bowden, le levier d'actionnement (2) pouvant, de manière sélective, être désaccouplé du composant de transfert (4) ou être accouplé au composant de transfert (4), une saillie (7) du levier d'actionnement (2) s'engageant dans un logement (8) pour provoquer un accouplement, lequel logement est supporté de manière mobile sur ou dans le composant de transfert (4) ou une saillie du composant de transfert (4) s'engageant dans un logement pour provoquer un accouplement, lequel logement est supporté de manière mobile sur ou dans le levier d'actionnement (2),
**caractérisé en ce que** le logement (8) est supporté de manière déplaçable à l'encontre de la force d'un dispositif de ressort par rapport au levier d'actionnement (2) ou par rapport au composant de transfert (4).

2. Dispositif de changement de rapports (1) selon la revendication 1, **caractérisé en ce que** le dispositif de ressort présente un ressort à lame (10).

3. Dispositif de changement de rapports (1) selon l'une quelconque des revendications 1 ou 2, **caractérisé en ce que**
a. le levier d'actionnement (2) présente un évidement (9) dans lequel est guidé de manière déplaçable le logement (8) ou **en ce que**
b. le levier d'actionnement (2) présente un évidement (9) dans lequel est guidée de manière déplaçable linéairement le logement (8) ou **en ce que**
c. le levier d'actionnement (2) présente un évidement (9) dans lequel est guidé de manière déplaçable le logement (8) le long de la direction dans laquelle peut être introduite la saillie (7) ou **en ce que**
d. le composant de transfert (4) présente un évidement (9) dans lequel est guidé de manière déplaçable le logement (8), ou **en ce que**
e. le composant de transfert (4) présente un évidement (9) dans lequel est guidé de manière déplaçable linéairement le logement (8) ou **en ce que**
f. le composant de transfert (4) présente un évidement (9) dans lequel est guidé de manière déplaçable linéairement le logement (8) le long de la direction dans laquelle peut être introduite la saillie (7).

4. Dispositif de changement de rapports (1) selon l'une quelconque des revendications 1 à 3, **caractérisé en ce que**
a. le logement (8) est réalisé à la manière d'un récipient et présente une ouverture à travers laquelle la saillie (7) peut être introduite et/ou **en ce que**
b. le logement (8) présente une enveloppe rigide qui entoure au moins une partie de la saillie (7) dans la position d'accouplement.

5. Dispositif de changement de rapports (1) selon l'une quelconque des revendications 1 à 4, **caractérisé en ce que**
a. une cavité du logement (8) se rétrécit à partir d'une ouverture à travers laquelle peut être introduite la saillie (7) et/ou **en ce que**
b. le logement (8) est réalisé avec une forme intérieure conique.

6. Dispositif de changement de rapports (1) selon l'une quelconque des revendications 1 à 5, **caractérisé en ce que** la saillie (7) se rétrécit vers son extrémité libre et/ou **en ce que** la saillie (7) est réalisée sous forme conique.

7. Dispositif de changement de rapports (1) selon l'une quelconque des revendications 1 à 6, **caractérisé en ce que**
a. le levier d'actionnement (2) et/ou le composant de transfert (4) sont supportés de manière déplaçable, notamment de manière rotative ou pivotante dans un cadre de commutation ou **en ce que**
b. le levier d'actionnement (2) et le composant de transfert (4) sont supportés de manière rotative ou pivotante autour d'un axe de pivotement commun (5) dans un cadre de commutation.

8. Dispositif de changement de rapports (1) selon l'une quelconque des revendications 1 à 7, **caractérisé en ce que** le levier d'actionnement (2) peut être transféré, notamment par pivotement, de manière sélective dans une première voie de changement de rapports dans laquelle il est accouplé au composant de transfert (4) ou peut être transféré, notamment par pivotement, dans une deuxième voie de changement de rapports dans laquelle il n'est pas accouplé au composant de transfert (4).

9. Boîte de vitesses automatiques comprenant un dispositif de changement de rapport (1) selon l'une quelconque des revendications 1 à 8.

10. Véhicule automobile comprenant une boîte de vitesses automatique selon la revendication 9 ou un dispositif de changement de rapports (1) selon l'une quelconque des revendications 1 à 8.
